# FASCICULE DE BREVET EUROPEEN

(11) **EP 3 494 159 B1**
(45) Date de publication et mention de la délivrance du brevet: **04.11.2020**
(21) Numéro de dépôt: 17765218.7
(22) Date de dépôt: 02.08.2017
(51) Int. Cl.: C08G 63/672

(54) **POLYESTER THERMOPLASTIQUE SEMI-CRISTALLIN POUR LA FABRICATION DE CONTENANT D'AEROSOL**
HALBKRISTALLINER THERMOPLASTISCHER POLYESTER ZUR HERSTELLUNG EINES AEROSOLBEHÄLTERS
SEMI-CRYSTALLINE THERMOPLASTIC POLYESTER FOR PRODUCING AN AEROSOL CONTAINER

(30) Priorité: 02.08.2016 FR 1657492
(43) Date de publication de la demande: 12.06.2019
(73) Titulaire: Roquette Frères, 62136 Lestrem (FR)
(72) Inventeur: AMEDRO, Hélène, 62400 Bethune (FR); SAINT-LOUP, René, 59160 Lomme (FR)
(74) Mandataire: Plasseraud IP
(86) Numéro de dépôt international: PCT/FR2017/052168
(87) Numéro de publication internationale: WO 2018/024987

(56) Documents cités:
- WO-A1-2015/022254
- US-A1- 2012 177 854

## Description

### Domaine de l'invention

La présente invention se rapporte au domaine des matières plastiques d'aérosols et concerne l'utilisation d'un polyester thermoplastique semi-cristallin comprenant au moins un motif 1,4 : 3,6-dianhydrohexitol pour la fabrication d'un contenant d'aérosol.

### Arrière-plan technologique de l'invention

Les matières plastiques sont devenues incontournables pour la fabrication en série d'objets. En effet, leur caractère thermoplastique permet à ces matières d'être transformées à cadence élevée en toutes sortes d'objets.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de films.

Toutefois, pour certaines applications ou dans certaines conditions d'utilisation, il est nécessaire d'améliorer certaines propriétés et notamment la résistance au choc ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon.

Un autre problème de ces PEIT est qu'ils peuvent présenter des propriétés insuffisantes de résistance au choc. De plus, la température de transition vitreuse peut être insuffisante pour la fabrication de certains objets plastiques.

Pour améliorer les propriétés de résistance au choc des polyesters, il est connu de l'art antérieur d'utiliser des polyesters dont on a réduit la cristallinité. En ce qui concerne les polyesters à base d'isosorbide, on peut citer la demande US2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées. Comme indiqué dans la partie introductive de cette demande, il s'agit d'obtenir des polymères dont on élimine la cristallinité par l'ajout de comonomères, et donc ici par l'ajout de 1,4-cyclohexanediméthanol. Dans la partie exemples est décrite la fabrication de différents poly(ethylène-co-1,4-cyclohexanediméthylène-co-isosorbide) téréphtalates (PECIT) ainsi qu'également un exemple de poly(1,4-cyclohexanediméthylène-co-isosorbide) téréphtalate (PCIT).

On peut également noter que, tandis que les polymères de type PECIT ont fait l'objet de développements commerciaux, ce n'est pas le cas des PCIT. En effet leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al.*, un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie *Synthesis* de la page 7222, cette dégradation étant notamment liée à la présence des diols aliphatiques cycliques tels que l'isosorbide. De ce fait, *Yoon et al.* ont utilisé un procédé dans lequel la température de polycondensation est limitée à 270°C. Yoon et al. ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Ainsi, malgré les modifications apportées aux PET, il existe toujours un besoin constant de nouveaux polyesters présentant des propriétés améliorées surtout dans le domaine des contenants d'aérosol où les contraintes et les cahiers des charges à respecter sont exigeants.

Justement, dans le domaine des aérosols il a souvent été proposé de remplacer le métal utilisé dans le contenant par des matières plastiques, et notamment du PET.

Malheureusement, à l'heure actuelle, les contenants d'aérosol en plastique et notamment ceux en PET peuvent avoir tendance à fluer et peuvent fuir ou éclater sous les pressions exercées pendant le remplissage, le stockage ou les phases de tests.

De plus, lors de la fabrication, des contraintes internes à la matière peuvent se libérer et créer des zones de moindre résistance ce qui se traduit à terme par une fissure dans le contenant. Ce phénomène est communément appelé « stress cracking » et se trouve être désavantageux pour la fabrication de contenants d'aérosol.

Malgré tout, des solutions ont été proposées afin d'adapter le PET à la fabrication de contenant d'aérosol.

Par exemple, la demande US 2013/0037580 A1 propose un contenant d'aérosol en plastique possédant un goulot thermiquement cristallisé, ledit goulot étant conçu pour recevoir un ensemble d'une soupape d'aérosol et un contenant d'aérosol dilaté et orienté par déformation, faisant corps avec la finition de goulot. Le goulot thermiquement cristallisé permet ainsi d'obtenir une meilleure résistance du contenant d'aérosol.

La demande WO 2007/051229 propose de renforcer le contenant à l'aide d'une bague et décrit ainsi un récipient pour distribuer un produit aérosol ou mis sous pression. Le récipient contient un corps formé de PET, une bague fixée au corps et une vanne de distribution fixée à la bague. La bague peut être encliquetée ou vissée sur le corps de manière à enjamber l'ouverture autour du col du corps formant ainsi un rebord profilé autour de celui-ci.

WO 2015/022254 A1 divulgue un contenant d'aérosol comprenant un polyester thermoplastique semi-cristallin.

Malgré la présence de solutions, ces dernières entrainent un surcoût important et des étapes supplémentaires ce qui n'est pas satisfaisant pour proposer des alternatives compétitives et le PET n'est toujours pas adapté de manière optimale à la fabrication de contenants d'aérosol. En effet, les solutions proposées ne concernent pas le polyester en tant que tel.

Il existe donc toujours un besoin de fournir de nouvelles matières plastiques, notamment de nouveaux polyesters thermoplastiques permettant avantageusement une utilisation pour la fabrication de contenant d'aérosol et présentant notamment des propriétés améliorées.

De plus, à l'heure actuelle, le cahier des charges Européen comporte une multitude de tests drastiques pour lesquels les PET classiques ne donnent pas entière satisfaction pour la fabrication de contenant d'aérosol en raison d'une tenue thermique et d'une température de transition vitreuse insuffisantes.

Il est donc du mérite de la Demanderesse d'avoir trouvé que ce besoin pouvait être atteint, contre toute attente, avec un polyester thermoplastique semi-cristallin à base d'isosorbide ne présentant pas d'éthylène glycol alors qu'il était connu jusqu'à présent que ce dernier était indispensable pour l'incorporation dudit l'isosorbide.

En effet, le polyester thermoplastique semi-cristallin utilisé selon la présente invention, grâce à une viscosité et un ratio en motif particuliers, se révèlent particulièrement avantageux pour une utilisation dans la fabrication de contenants d'aérosols notamment grâce à une température de transition vitreuse élevée.

L'utilisation de polyester thermoplastique selon l'invention permet ainsi de réduire les phénomènes de stress cracking dans le contenant d'aérosol fabriqué, tout en améliorant les propriétés finales obtenues, notamment en termes de résistance à la pression et de tenue aux hautes températures.

### Résumé de l'invention

Un premier objet de l'invention concerne l'utilisation d'un polyester thermoplastique semi-cristallin pour la fabrication d'un contenant d'aérosol, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
   dans lequel le ratio molaire (A)/[(A)+(B)] étant d'au moins 0,05 et d'au plus 0,30,
ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 70 mL/g.

Un second objet de l'invention concerne un procédé de fabrication d'un contenant d'aérosol à base du polyester thermoplastique semi-cristallin décrit ci-dessus.

Enfin, un troisième objet de l'invention concerne un aérosol comprenant le polyester thermoplastique semi-cristallin tel que précédemment décrit.

### Description détaillée de l'invention

L'invention a ainsi pour objet l'utilisation d'un polyester thermoplastique semi-cristallin pour la fabrication d'un contenant d'aérosol, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
dans lequel le ratio molaire (A)/[(A)+(B)] étant d'au moins 0,05 et d'au plus 0,30 et la viscosité réduite en solution supérieure à 70 mL/g.

Le polyester thermoplastique semi-cristallin est exempt de motifs diol aliphatiques non cycliques ou en comprend une faible quantité.

Par « faible quantité molaire de motifs diol aliphatique non cyclique», on entend notamment une quantité molaire de motifs diol aliphatique non cyclique inférieure à 5%. Selon l'invention, cette quantité molaire représente le rapport de la somme des motifs diol aliphatique non cyclique, ces motifs pouvant être identiques ou différents, par rapport à la totalité des motifs monomériques du polyester.

Par « ratio molaire (A)/[(A)+(B)] » on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Cette quantité molaire de motif diol aliphatique non cyclique est avantageusement inférieure à 1%. De préférence, le polyester est exempt de motif diol aliphatique non cyclique et plus préférentiellement, il est exempt d'éthylène glycol.

Malgré la faible quantité de diol aliphatique non cyclique, et donc d'éthylène glycol, utilisé pour la synthèse, il est obtenu de manière surprenante un polyester thermoplastique semi-cristallin présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB® P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. D'une manière préférentielle, le diol alicyclique (B) est le 1,4-cyclohexanedimethanol.

Le diol alicyclique (B) peut être dans la configuration *cis*, dans la configuration *trans* ou peut être un mélange de diols en configuration *cis* et *trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est d'au moins 0,05 et d'au plus 0,30. Avantageusement, ce ratio est d'au moins 0,1 et d'au plus 0,28, et tout particulièrement ce ratio est d'au moins 0,15 et d'au plus 0,25.

Un polyester thermoplastique semi-cristallin particulièrement adapté pour la fabrication d'un contenant d'aérosol comprend:
- une quantité molaire de motifs 1,4 : 3,6-dianhydrohexitol (A) allant de 2,5 à 14 % mol ;
- une quantité molaire de motifs diol alicyclique (B) autre que les motifs 1,4 : 3,6-dianhydrohexitol (A) allant de 31 à 42,5 % mol ;
- une quantité molaire de motifs acide téréphtalique (C) allant de 45 à 55 % mol.

Les quantités en différents motifs dans le polyester peuvent être déterminées par RMN 1H ou par analyse chromatographique du mélange de monomères issus d'une méthanolyse ou d'une hydrolyse complète du polyester, de préférence par RMN 1H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques semi-cristallins utilisés selon l'invention présentent une température de fusion allant de 210 à 295°C, par exemple de 240 à 285 °C.

De plus, les polyesters thermoplastiques semi-cristallins présentent une température de transition vitreuse allant de 85 à 120°C, par exemple de 90 à 115°C.

Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Avantageusement, le polyester thermoplastique semi-cristallin présente une chaleur de fusion supérieure à 10 J/g, de préférence supérieure à 20 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10°C/min.

Le polyester thermoplastique semi-cristallin utilisé selon l'invention présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution dudit polyester thermoplastique semi-cristallin est supérieure à 70 mL/g et de préférence inférieure à 130 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère semi-cristallin des polyesters thermoplastiques utilisés selon la présente invention se caractérise lorsque que ces derniers, après un traitement thermique de 16h à 170°C, présentent des raies de diffraction aux rayons X ou un pic de fusion endothermique en Analyse Calorimétrique Différentielle à Balayage (DSC).

Le polyester thermoplastique semi-cristallin tel que précédemment défini présente bien des avantages pour la fabrication d'un contenant d'aérosol.

En effet, grâce notamment au ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,05 et d'au plus 0,30 et à une viscosité réduite en solution supérieure à 70 mL/g et de préférence inférieure à 130 mL/g, les polyesters thermoplastiques semi-cristallins ont une meilleure tenue thermique et une meilleure température de transition vitreuse ce qui permet aux contenants d'aérosol fabriqués à partir de ces derniers de présenter une meilleure résistance à la pression tout en réduisant les phénomènes de stress cracking.

Un contenant d'aérosol au sens de la présente invention est un contenant essentiellement constitué de plastique et peut être par exemple une bouteille, un flacon ou encore un réservoir. De préférence le contenant est un réservoir. Le contenant d'aérosol permet ensuite la fabrication de l'aérosol en tant que tel.

Les contenants d'aérosol selon l'invention peuvent être directement fabriqués à partir de l'état fondu après polymérisation du polyester thermoplastique semi-cristallin.

Selon une alternative, le polyester thermoplastique semi-cristallin peut être conditionné sous une forme facilement manipulable telle que des pellets ou des granulés avant d'être utilisé pour la fabrication d'un contenant d'aérosol. D'une manière préférentielle, le polyester thermoplastique semi-cristallin est conditionné sous forme de granulés, lesdits granulés étant avantageusement séchés avant la transformation sous forme d'un contenant d'aérosol. Le séchage est réalisé de manière à obtenir des granulés présentant un taux d'humidité résiduelle inférieur à 300 ppm, préférentiellement inférieur à 200 ppm comme par exemple environ 134 ppm.

La fabrication d'un contenant d'aérosol peut se faire selon les techniques connues de l'homme du métier. Par exemple, la fabrication peut être réalisée par extrusion-soufflage avec bi-étirage ou par injection-soufflage (en anglais « injection stretch blow moulding » (ISBM)).

De préférence la fabrication est réalisée par injection soufflage. Selon cette méthode, le polyester thermoplastique semi-cristallin est injecté pour former une préforme. Le col de la préforme possède déjà sa forme définitive et constitue la partie qui sert à maintenir le futur contenant pendant l'opération de soufflage. Si nécessaire, la préforme est réchauffée et enfermée dans un moule de soufflage ayant la forme désirée. Le moule peut être formé de deux demi-coquilles présentant des empreintes sur la face intérieure permettant de donner au futur contenant des aspects de surface particuliers.

Lorsque la préforme est introduite dans le moule, une canne d'étirage vient étirer la matière axialement, et l'on effectue un pré-soufflage à quelques bars de pression. Le soufflage final est effectué par injection d'air comprimé. Ainsi, les chaînes polymères sont orientées à la fois selon un axe longitudinal du futur contenant et à la fois radialement et le polyester se refroidit au contact du moule ce qui fige le contenant dans sa forme finale. Cette bi-orientation permet d'obtenir des contenants d'aérosol aux propriétés mécaniques améliorées.

La forme et le volume du contenant d'aérosol fabriqué sont fonctions des caractéristiques du moule utilisé pour le soufflage. Concernant le volume, il peut varier de quelques cm³ à quelques dm³, notamment de 50 cm³ à 1500 cm³ et de préférence de 100 cm³ à 1000 cm³ et encore plus particulièrement de 100 cm³ à 500 cm³, comme par exemple 300 cm³.

Selon un mode de réalisation particulier, le polyester thermoplastique semi-cristallin précédemment défini est utilisé en combinaison avec un ou plusieurs polymères additionnels pour la fabrication d'un contenant d'aérosol.

Le polymère additionnel peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

Le polymère additionnel peut également être un polymère permettant d'améliorer les propriétés au choc du polyester, notamment les polyoléfines fonctionnelles telles que les polymères et copolymères d'éthylène ou de propylène fonctionnalisés, des copolymères cœur-écorce ou des copolymères à bloc.

Un ou plusieurs additifs peuvent également être ajoutés lors de la fabrication d'un contenant d'aérosol à partir du polyester thermoplastique semi-cristallin afin de lui conférer des propriétés particulières.

Ainsi, à titre d'exemple d'additif, on peut citer les agents opacifiants, des colorants et des pigments. Ils peuvent être choisis parmi l'acétate de cobalt et les composés suivants : HS-325 Sandoplast® RED BB (qui est un composé porteur d'une fonction azo également connu sous le nom Solvent Red 195), HS-510 Sandoplast® Blue 2B qui est une anthraquinone, Polysynthren® Blue R, et Clariant® RSB Violet.

L'additif peut être également un agent de résistance aux UV comme par exemple des molécules type benzophénone ou benzotriazole, comme la gamme Tinuvin™ de BASF : tinuvin 326, tinuvin P ou le tinuvin 234 par exemple ou des amines encombrées comme la gamme Chimassorb™ de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit® OP) ou comme la gamme des cyanurates mélaminés (par exemple les melapur™ : mélapur 200) ou encore des hydroxydes d'aluminium ou de magnésium.

Un second objet de l'invention concerne un procédé de fabrication d'un contenant d'aérosol, ledit procédé comprenant les étapes suivantes de:
- Fourniture d'un polyester thermoplastique semi-cristallin tel que défini ci-dessus,
- Préparation dudit contenant d'aérosol à partir du polyester thermoplastique semi-cristallin obtenu à l'étape précédente.

L'étape de préparation peut être réalisée selon les méthodes connues de l'homme du métier classiquement mises en œuvre pour la fabrication des contenants d'aérosol.

Ainsi à titre d'exemple, la préparation peut être réalisée par extrusion-soufflage avec bi-étirage ou par injection-soufflage. De préférence, la fabrication est réalisée par injection soufflage.

Un troisième objet de l'invention concerne des contenants d'aérosol comprenant le polyester thermoplastique semi-cristallin décrit ci-dessus. Les contenants d'aérosol selon l'invention peuvent également comprendre un polymère additionnel et/ou un ou plusieurs additifs tels que définis ci-dessus.

Le polyester thermoplastique semi-cristallin particulièrement adapté pour la fabrication d'un contenant d'aérosol peut être préparé par un procédé de synthèse comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique ou comprenant, par rapport à la totalité des monomères introduits, une quantité molaire de motifs diol aliphatique non cyclique inférieure à 5% ;
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280°C, avantageusement de 270 à 280°C, par exemple 275°C ;
   ▪ un second stade de condensation des oligomères pendant lequel les oligomères formés sont agités sous vide à une température allant de 278 à 300°C afin de former le polyester, avantageusement de 280 à 290°C, par exemple 285°C ;
- une étape de récupération du polyester thermoplastique semi-cristallin.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité conformément à l'utilisation selon l'invention pour la fabrication d'un contenant.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US2011282020A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox® 0 3, Hostanox® 0 10, Hostanox® 0 16, Ultranox® 210, Ultranox®276, Dovernox® 10, Dovernox® 76, Dovernox® 3114, Irganox® 1010, Irganox® 1076 ou un phosphonate tel que l'Irgamod® 195. L'anti-oxydant secondaire peut être des composés phosphorés trivalents tels que Ultranox® 626, Doverphos® S-9228, Hostanox® P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé de synthèse comprend une étape de récupération du polyester à l'issue de l'étape de polymérisation. Le polyester thermoplastique semi-cristallin ainsi récupéré peut ensuite être mis en forme tel que décrit précédemment.

Selon une variante du procédé de synthèse, une étape d'augmentation de masse molaire est réalisée après l'étape de récupération du polyester thermoplastique semi-cristallin.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante du procédé de fabrication, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 10 J/g, de préférence supérieure à 20 J/g, la mesure de cette chaleur de fusion consistant à faire subir à un échantillon de ce polymère de viscosité réduite en solution plus faible un traitement thermique à 170°C pendant 16 heures puis à évaluer la chaleur de fusion par DSC en chauffant l'échantillon à 10 K/min.

Avantageusement, l'étape de PCS est réalisée à une température allant de 190 à 280°C, de préférence allant de 200 à 250°C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante du procédé de fabrication, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être à une supérieure à la température de fusion du polymère. La température à l'intérieur de l'extrudeuse peut aller de 150 à 320°C.

L'invention sera mieux comprise à l'aide des exemples et figures ci-après qui se veulent purement illustratifs et ne limitent en rien la portée de la protection.

### Exemples

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage.

De même la détermination de l'enthalpie de fusion (aire sous la courbe) est réalisée au premier chauffage.

Pour les exemples illustratifs présentés ci-dessous les réactifs suivants ont été utilisés : 1,4-Cyclohexane dimethanol (pureté 99%, mélange d'isomères cis et trans)
Isosorbide (pureté >99,5%) Polysorb® P de Roquette Frères
Acide téréphtalique (pureté 99+%) de Acros
Irganox® 1010 de BASF AG
Dibutylétain oxyde (pureté 98%) de Sigma Aldrich

### Exemple 1 : Préparation d'un polyester thermoplastique semi-cristallin et utilisation pour la fabrication d'un contenant d'aérosol.

### A : Polymérisation

Ainsi, dans un réacteur de 7,5L sont ajoutés 1432 g (9,9 mol) de 1,4-cyclohexanedimethanol, 484 g (3,3 mol) d'isosorbide, 2000 g (12,0 mol) d'acide téréphtalique, 1,65 g d'Irganox 1010 (anti-oxydant) et 1,39 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80°C. Le mélange réactionnel est ensuite chauffé à 275°C (4°C/min) sous 6,6 bars de pression et sous agitation constante (150 tr/min) jusqu'à obtenir un taux d'estérification de 87%. (Estimé à partir de la masse de distillat collectée). Puis, la pression est réduite à 0,7 mbar en 90 minutes selon une rampe logarithmique et la température amenée à 285°C.

Ces conditions de vide et de température ont été maintenues jusqu'à obtenir une augmentation de couple de 12,1 Nm par rapport au couple initial.

Enfin, un jonc de polymère est coulé par la vanne de fond du réacteur, refroidi dans un bac d'eau thermo-régulé à 15°C et découpé sous de forme de granulés d'environ 15 mg.

La résine ainsi obtenue a une viscosité réduite en solution de 80,1 mL/g.

L'analyse par RMN ¹H du polyester montre que le polyester final contient 17,0 % mol d'isosorbide par rapport aux diols.

En ce qui concerne les propriétés thermiques, le polyester présente une température de transition vitreuse de 96°C, une température de fusion de 253°C avec une enthalpie de fusion de 23,2 J/g.

Les granulés sont ensuite utilisés dans une étape de post condensation à l'état solide.

Pour ce faire, les granulés sont préalablement cristallisés pendant 2h en étuve sous vide à 170°C.

L'étape de post condensation en phase solide est ensuite réalisée sur 10 kg de ces granulés durant 20h à 210°C sous flux d'azote (1500 l/h) afin d'augmenter la masse molaire. La résine présente ainsi, après condensation en phase solide, une viscosité réduite en solution de 103,4 mL.g⁻¹.

### B- Mise en forme par injection-soufflage (ISBM)

Les granulés du polyester obtenus à l'étape précédente sont séchés à 140°C sous azote afin d'atteindre des taux d'humidité résiduelle inférieurs à 300 ppm. Dans cet exemple, la teneur en humidité des granulés est de 134 ppm.

L'injection s'effectue sur une presse mono-cavité Husky avec obturateurs.

Les granulés, maintenus en condition anhydride, sont introduits dans la trémie de la presse à injecter et les paramètres d'injection sont détaillés dans le tableau 1 ci-dessous :

**Tableau 1**

| **Paramètres** | **Unités** | **Valeurs** |
|---|---|---|
| Température zone d'introduction | °C | 220 |
| Température du plastique à l'état fondu (buse / fourreau) | °C | 275/275/260/260 |
| Température du moule | °C | 50 |
| Vitesse d'injection | mm/s | 80 |
| Pression de maintien | bars | 29 |
| Durée du maintien | s | 15 |
| Temps de refroidissement | s | 15 |

Après l'injection, les préformes obtenues présente un poids de 23 gr et possèdent un col renforcé spécifique au remplissage à chaud.

Les préformes ainsi injectées sont ensuite soufflées dans un moule présentant à la forme finale du contenant d'aérosols.

Après le soufflage, les contenants obtenus sont utilisés pour fabriquer un aérosol qui est alors rempli avec un gaz en pression. Aucune déformation n'est observée et le contenant maintient parfaitement sa forme. De plus, Les contenants ne présentent pas de stress cracking même après 48h après un remplissage avec une solution à 2% de citronellol dans l'eau.

Les polyesters thermoplastiques semi-cristallins selon l'invention sont donc particulièrement avantageux pour la fabrication d'un contenant d'aérosol et constituent donc une très bonne alternative aux polymères déjà présents sur le marché.

### Exemple 2 : Préparation d'un polyester thermoplastique semi-cristallin et utilisation pour la fabrication d'une bouteille.

### A : Préparation

Un second polyester semi-cristallin **P2** selon l'invention a été préparé suivant le même mode opératoire que l'exemple 1. Les quantités des différents composés ont été adaptées de manière à obtenir le polyester **P2** présentant 25 % en moles d'isosorbide.

Les quantités ont été déterminées par RMM ¹H et les quantités sont exprimées en pourcentage par rapport à la quantité totale de diols dans le polyester.

La viscosité réduite en solution du polyester **P2** est 79 mL/g.

### B- Mise en forme de la bouteille par injection-soufflage (ISBM)

Les granulés du polyester **P2** obtenus à l'étape A de polymérisation sont ensuite séchés avant l'injection pendant 6h à 150°C et présentent ainsi une teneur en humidité de 0,129 % en poids.

L'injection s'effectue sur une presse mono-cavité Husky avec obturateurs.

Les granulés, maintenus en condition anhydride, sont introduits dans la trémie de la presse à injecter et les paramètres d'injection sont détaillés dans le tableau 2 ci-dessous :

**Tableau 2**

| **Paramètres** | **Unités** | **Valeurs** |
|---|---|---|
| Diamètre de la vis | mm | 35 |
| Ratio L/D | / | 23 |
| Température d'injection (buse / fourreau) | °C | 290/280/270/260/250 |
| Température du moule | °C | 50 |
| Vitesse de chargement | mm/s | 100 |
| Vitesse d'injection | cm³/s | 40 / 128 |
| Pression d'injection | bars | 1250 |
| Pression de maintien | bars | 900 |
| Contre-pression (backpressure) | bars | 75 |
| Durée du maintien | s | 15 |
| Temps de refroidissement | s | 12 |

Après l'injection, les préformes obtenues présentent un poids de 23,7 gr et possèdent un col renforcé spécifique au remplissage sous pression.

Les préformes fabriquées ont ensuite été soufflées dans un moule pour l'obtention de bouteille de 0,5 L. La machine utilisée pour le soufflage présente les caractéristiques générales ci-dessous :

| **Caractéristiques** | **Valeurs** |
|---|---|
| Volume maximum du produit | 2,5-5 L |
| Hauteur maximale de la préforme | 200 mm |
| Epaisseur de la paroi de la préforme | 1-4 mm |
| Diamètre maximal du produit | 170 mm |
| Hauteur maximal du produit | 350 mm |
| Capacité de production | 500-800 Unités/heure |

Le soufflage des préformes a ensuite été effectué selon les paramètres suivants :

| **Paramètres** | **Valeurs** |
|---|---|
| Température de ramollissement (soft temperature) | 86 °C |
| Température du moule | 25 °C |
| Délai d'allongement (strech delay) | 0,05 s |
| Délai de soufflage (blown delay) | 0,2 s |
| Premier soufflage | 0,3 s |
| Second soufflage | 4 s |
| Déchargement | 1 s |

Les bouteilles obtenues présentent un aspect uniforme et aucune déformation de surface n'est observée à l'œil nu. Après remplissage avec un gaz sous pression, les bouteilles maintiennent parfaitement leur forme et ne présentent pas de stress cracking même après 48h après un remplissage avec une solution à 2% de citronellol dans l'eau.

Le polyester thermoplastique semi-cristallin selon l'invention est donc parfaitement adapté pour la fabrication de contenants d'aérosol.

## Revendications

1. Utilisation d'un polyester thermoplastique semi-cristallin pour la fabrication d'un contenant d'aérosol, ledit polyester comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[(A)+(B)] étant d'au moins 0,05 et d'au plus 0,30 ; ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 70 mL/g.

2. Utilisation selon la revendication 1, **caractérisée en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

3. Utilisation selon l'une des revendications 1 ou 2, **caractérisée en ce que** le 1,4 : 3,6-dianhydrohexitol (A) est l'isosorbide.

4. Utilisation selon l'une des revendications 1 à 3, **caractérisée en ce que** le polyester est exempt de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

5. Utilisation selon l'une des revendications 1 à 4, **caractérisée en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

6. Utilisation selon l'une des revendications 1 à 5, **caractérisée en ce que** le contenant d'aérosol comprend un ou plusieurs polymères additionnels et/ou un ou plusieurs additifs.

7. Contenant d'aérosol comprenant un polyester thermoplastique semi-cristallin comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[(A)+(B)] étant d'au moins 0,05 et d'au plus 0,30 ; ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 70 mL/g.

8. Contenant d'aérosol selon la revendication 7, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

9. Contenant d'aérosol selon l'une des revendications 7 ou 8, **caractérisé en ce que** le 1,4 : 3,6-dianhydrohexitol (A) est l'isosorbide.

10. Contenant d'aérosol selon l'une des revendications 7 à 9, **caractérisé en ce que** le polyester est exempt de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

11. Contenant d'aérosol selon l'une des revendications 7 à 10, **caractérisé en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

12. Contenant d'aérosol selon l'une des revendications 7 à 11, **caractérisé en ce que** le contenant d'aérosol comprend un ou plusieurs polymères additionnels et/ou un ou plusieurs additifs.

13. Procédé de fabrication d'un contenant d'aérosol comprenant les étapes suivantes de:
- Fourniture d'un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] étant d'au moins 0,05 et d'au plus 0,30, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 70 mL/g,
- Préparation dudit contenant d'aérosol à partir du polyester thermoplastique semi-cristallin obtenu à l'étape précédente.

14. Procédé de fabrication selon la revendication 13, **caractérisé en ce que** l'étape de préparation est réalisée par la méthode de l'injection-soufflage.

15. Procédé de fabrication selon l'une des revendications 13 ou 14, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

16. Procédé de fabrication selon l'une des revendications 13 à 15, **caractérisé en ce que** le 1,4 : 3,6-dianhydrohexitol (A) est l'isosorbide.

17. Procédé de fabrication selon l'une des revendications 13 à 16, **caractérisé en ce que** le polyester est exempt de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

18. Procédé de fabrication selon l'une des revendications 13 à 17, **caractérisé en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

19. Procédé de fabrication selon l'une des revendications 13 à 18, **caractérisé en ce que** le contenant d'aérosol comprend un ou plusieurs polymères additionnels et/ou un ou plusieurs additifs.

## Patentansprüche

1. Verwendung eines teilkristallinen thermoplastischen Polyesters zur Herstellung eines Aerosolbehälters, wobei der Polyester umfasst:
• mindestens eine 1,4 : 3,6-Dianhydrohexitol-Einheit (A);
• mindestens eine andere alicyclische Dioleinheit (B) als die 1,4 : 3,6-Dianhydrohexitol-Einheiten (A);
• mindestens eine Terephthalsäureeinheit (C);
wobei das Molverhältnis (A)/[(A)+(B)] mindestens 0,05 und höchstens 0,30 beträgt;
wobei der Polyester frei von nichtcyclischen aliphatischen Dioleinheiten ist oder eine molare Menge nichtcyclischer aliphatischer Dioleinheiten, bezogen auf die Gesamtheit der Monomereinheiten des Polyesters, von weniger als 5% umfasst und dessen reduzierte Viskosität in Lösung (25 °C; Phenol (50%m) : ortho-Dichlorbenzol (50%m) ; 5 g/l Polyester) größer als 70 ml/g ist.

2. Verwendung nach Anspruch 1, **dadurch gekennzeichnet, dass** das alicyclische Diol (B) ein Diol ist, ausgewählt aus 1,4-Cyclohexandimethanol, 1,2-Cyclohexandimethanol, 1,3-Cyclohexandimethanol oder einer Mischung dieser Diole, sehr bevorzugt 1,4-Cyclohexandimethanol.

3. Verwendung nach einem der Ansprüche 1 oder 2, **dadurch gekennzeichnet, dass** das 1,4 : 3,6-Dianhydrohexitol (A) Isosorbid ist.

4. Verwendung nach einem der Ansprüche 1 bis 3, **dadurch gekennzeichnet, dass** der Polyester frei von einer nichtcyclischen aliphatischen Dioleinheit ist oder eine molare Menge nichtcyclischer aliphatischer Dioleinheiten, bezogen auf die Gesamtheit der Monomereinheiten des Polyesters, von weniger als 1% umfasst, vorzugsweise dass der Polyester frei von nichtcyclischen aliphatischen Dioleinheiten ist.

5. Verwendung nach einem der Ansprüche 1 bis 4, **dadurch gekennzeichnet, dass** das Molverhältnis (3,6-Dianhydrohexitol-Einheit (A) + andere alicyclische Diol-Einheit (B) als die 1,4 : 3,6-Dianhydrohexitol-Einheiten (A)) / (Terephthalsäureeinheit (C)) 1,05 bis 1,5 beträgt.

6. Verwendung nach einem der Ansprüche 1 bis 5, **dadurch gekennzeichnet, dass** der Aerosolbehälter ein oder mehrere zusätzliche Polymere und/oder ein oder mehrere Additive umfasst.

7. Aerosolbehälter, umfassend einen teilkristallinen thermoplastischen Polyester, umfassend:
• mindestens eine 1,4 : 3,6-Dianhydrohexitol-Einheit (A);
• mindestens eine andere alicyclische Dioleinheit (B) als die 1,4 : 3,6-Dianhydrohexitol-Einheiten (A);
• mindestens eine Terephthalsäureeinheit (C);
wobei das Molverhältnis (A)/[(A)+(B)] mindestens 0,05 und höchstens 0,30 beträgt;
wobei der Polyester frei von nichtcyclischen aliphatischen Dioleinheiten ist oder eine molare Menge nichtcyclischer aliphatischer Dioleinheiten, bezogen auf die Gesamtheit der Monomereinheiten des Polyesters, von weniger als 5% umfasst und dessen reduzierte Viskosität in Lösung (25 °C; Phenol (50%m) : ortho-Dichlorbenzol (50%m) ; 5 g/l Polyester) größer als 70 ml/g ist.

8. Aerosolbehälter nach Anspruch 7, **dadurch gekennzeichnet, dass** das alicyclische Diol (B) ein Diol ist, ausgewählt aus 1,4-Cyclohexandimethanol, 1,2-Cyclohexandimethanol, 1,3-Cyclohexandimethanol oder eine Mischung dieser Diole, sehr bevorzugt 1,4-Cyclohexandimethanol.

9. Aerosolbehälter nach einem der Ansprüche 7 oder 8, **dadurch gekennzeichnet, dass** das 1,4 : 3,6-Dianhydrohexitol (A) Isosorbid ist.

10. Aerosolbehälter nach einem der Ansprüche 7 bis 9, **dadurch gekennzeichnet, dass** der Polyester frei von nichtcyclischen aliphatischen Dioleinheiten ist oder eine molare Menge nichtcyclischer aliphatischer Dioleinheiten, bezogen auf die Gesamtheit der Monomereinheiten des Polyesters, von weniger als 1% umfasst, vorzugsweise dass der Polyester frei von nichtcyclischen aliphatischen Dioleinheiten ist.

11. Aerosolbehälter nach einem der Ansprüche 7 bis 10, **dadurch gekennzeichnet, dass** das Molverhältnis (3,6-Dianhydrohexitol-Einheit (A) + andere alicyclische Diol-Einheit (B) als die 1,4 : 3,6-Dianhydrohexitol-Einheiten (A)) / (Terephthalsäureeinheit (C)) 1,05 bis 1,5 beträgt.

12. Aerosolbehälter nach einem der Ansprüche 7 bis 11, **dadurch gekennzeichnet, dass** der Aerosolbehälter ein oder mehrere zusätzliche Polymere und/oder ein oder mehrere Additive umfasst.

13. Verfahren zur Herstellung eines Aerosolbehälters, umfassend die folgenden Schritte:
- Bereitstellung eines teilkristallinen thermoplastischen Polyesters, umfassend mindestens eine 1,4 : 3,6-Dianhydrohexitol-Einheit (A), mindestens eine andere alicyclische Dioleinheit (B) als die 1,4 : 3,6-Dianhydrohexitol-Einheiten (A), mindestens eine Terephthalsäureeinheit (C), wobei das Molverhältnis (A)/[(A)+(B)] mindestens 0,05 und höchstens 0,30 beträgt, wobei der Polyester frei von nichtcyclischen aliphatischen Dioleinheiten ist oder eine molare Menge nichtcyclischer aliphatischer Dioleinheiten, bezogen auf die Gesamtheit der Monomereinheiten des Polyesters, von weniger als 5% umfasst und dessen reduzierte Viskosität in Lösung (25 °C; Phenol (50%m) : ortho-Dichlorbenzol (50%m) ; 5 g/l Polyester) größer als 70 ml/g ist,
- Herstellung des Aerosolbehälters aus dem im vorhergehenden Schritt erhaltenen teilkristallinen thermoplastischen Polyester.

14. Verfahren zur Herstellung nach Anspruch 13, **dadurch gekennzeichnet, dass** der Herstellungsschritt durch das Spritzblasformverfahren durchgeführt wird.

15. Verfahren zur Herstellung nach einem der Ansprüche 13 oder 14, **dadurch gekennzeichnet, dass** das alicyclische Diol (B) ein Diol ist, ausgewählt aus 1,4-Cyclohexandimethanol, 1,2-Cyclohexandimethanol, 1,3-Cyclohexandimethanol oder einer Mischung dieser Diole, sehr bevorzugt 1,4-Cyclohexandimethanol.

16. Verfahren zur Herstellung nach einem der Ansprüche 13 bis 15, **dadurch gekennzeichnet, dass** das 1,4 : 3,6-Dianhydrohexitol (A) Isosorbid ist.

17. Verfahren zur Herstellung nach einem der Ansprüche 13 bis 16, **dadurch gekennzeichnet, dass** der Polyester frei von nichtcyclischen aliphatischen Dioleinheiten ist oder eine molare Menge nichtcyclischer aliphatischer Dioleinheiten, bezogen auf die Gesamtheit der Monomereinheiten des Polyesters, von weniger als 1% umfasst, vorzugsweise dass der Polyester frei von nichtcyclischen aliphatischen Dioleinheiten ist.

18. Verfahren zur Herstellung nach einem der Ansprüche 13 bis 17, **dadurch gekennzeichnet, dass** das Molverhältnis (3,6-Dianhydrohexitol-Einheit (A) + andere alicyclische Diol-Einheit (B) als die 1,4 : 3,6-Dianhydrohexitol-Einheiten (A)) / (Terephthalsäureeinheit (C)) 1,05 bis 1,5 beträgt.

19. Verfahren zur Herstellung nach einem der Ansprüche 13 bis 18, **dadurch gekennzeichnet, dass** der Aerosolbehälter ein oder mehrere zusätzliche Polymere und/oder ein oder mehrere Additive umfasst.

## Claims

1. The use of a semicrystalline thermoplastic polyester for producing an aerosol container, said polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
wherein the (A)/[(A)+(B)] molar ratio is at least 0.05 and at most 0.30;
said polyester not containing any aliphatic non-cyclic diol units or comprising a molar amount of aliphatic non-cyclic diol units, relative to all the monomer units of the polyester, of less than 5%, and the reduced solution viscosity (25°C; phenol (50%m): ortho-dichlorobenzene (50%m); 5 g/l of polyester) of said polyester being greater than 70 ml/g.

2. The use as claimed in claim 1, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

3. The use as claimed in either of claims 1 and 2, **characterized in that** the 1,4:3,6-dianhydrohexitol (A) is isosorbide.

4. The use as claimed in any one of claims 1 to 3, **characterized in that** the polyester does not contain any aliphatic non-cyclic diol units, or comprises a molar amount of aliphatic non-cyclic diol units, relative to all the monomer units of the polyester, of less than 1%, preferably the polyester does not contain any aliphatic non-cyclic diol units.

5. The use as claimed in one of claims 1 to 4, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

6. The use as claimed in one of claims 1 to 5, **characterized in that** the aerosol container comprises one or more additional polymers and/or one or more additives.

7. An aerosol container comprising a semicrystalline thermoplastic polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
wherein the (A)/[(A)+(B)] molar ratio is at least 0.05 and at most 0.30;
said polyester not containing any aliphatic non-cyclic diol units or comprising a molar amount of aliphatic non-cyclic diol units, relative to all the monomer units of the polyester, of less than 5%, and the reduced solution viscosity (25°C; phenol (50%m): ortho-dichlorobenzene (50%m); 5 g/l of polyester) of said polyester being greater than 70 ml/g.

8. The aerosol container as claimed in claim 7, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

9. The aerosol container as claimed in either of claims 7 and 8, **characterized in that** the 1,4:3,6-dianhydrohexitol (A) is isosorbide.

10. The aerosol container claimed in one of claims 7 to 9, **characterized in that** the polyester does not contain any aliphatic non-cyclic diol units, or comprises a molar amount of aliphatic non-cyclic diol units, relative to all the monomer units of the polyester, of less than 1%, preferably the polyester does not contain any aliphatic non-cyclic diol units.

11. The aerosol container as claimed in one of claims 7 to 10, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

12. The aerosol container as claimed in one of claims 7 to 11, **characterized in that** the aerosol container comprises one or more additional polymers and/or one or more additives.

13. A process for producing an aerosol container, comprising the following steps:
- provision of a semicrystalline thermoplastic polyester comprising at least one 1,4:3,6-dianhydrohexitol unit (A), at least one alicyclic diol unit (B) other than the 1,4:3,6-dianhydrohexitol units (A), at least one terephthalic acid unit (C), wherein the (A)/[(A)+(B)] molar ratio is at least 0.05 and at most 0.30, said polyester not containing any aliphatic non-cyclic diol units or comprising a molar amount of aliphatic non-cyclic diol units, relative to all the monomer units of the polyester, of less than 5%, and the reduced solution viscosity (25°C; phenol (50%m):ortho-dichlorobenzene (50%m); 5 g/l of polyester) of said polyester being greater than 70 ml/g;
- preparation of said aerosol container from the semicrystalline thermoplastic polyester obtained in the preceding step.

14. The production process as claimed in claim 13, **characterized in that** the preparation is carried out by the injection stretch blow molding method.

15. The production process as claimed in either of claims 13 and 14, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

16. The production process as claimed in one of claims 13 to 15, **characterized in that** the 1,4:3,6-dianhydrohexitol (A) is isosorbide.

17. The production process as claimed in one of claims 13 to 16, **characterized in that** the polyester does not contain any aliphatic non-cyclic diol units, or comprises a molar amount of aliphatic non-cyclic diol units, relative to all the monomer units of the polyester, of less than 1%, preferably the polyester does not contain any aliphatic non-cyclic diol units.

18. The production process as claimed in one of claims 13 to 17, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

19. The production process as claimed in one of claims 13 to 18, **characterized in that** the aerosol container comprises one or more additional polymers and/or one or more additives.
